# EUROPÄISCHE PATENTANMELDUNG

(11) **EP 0 668 031 A2**
(43) Veröffentlichungstag der Anmeldung: **23.08.1995**
(21) Anmeldenummer: 95100815.0
(22) Anmeldetag: 21.01.1995
(51) Int. Cl.: A43B 5/04

(54) **Skischuh**

(30) Priorität: 18.02.1994 AT 332/94
(71) Anmelder: HTM Sport- und Freizeitgeräte Aktiengesellschaft, A-2320 Schwechat (AT)
(72) Erfinder: Wittmann, Heinz, A-1100 Wien (AT)
(74) Vertreter: Szász, Tibor, Dipl.-Ing.

(57) **Zusammenfassung**

Um bei einem Skischuh die Beweglichkeit zwischen Schale (1) und Schaft (2) weitestgehend zu verhindern, ist ein Brückenelement (3) vorgesehen, das an seinem oberen Ende durch drei Niete (5, 5', 5") mit dem Schaft (2) und an seinem unteren Ende mit einem Niet (6) mit der Schale (1) verbunden ist. Zweckmäßig ist zwischen dem Brückenelement (3) und der Schale (1) bzw. dem Schaft (2) eine als Dämpfung dienende Lage (9) aus Kunststoff angeordnet, die mittels entsprechender Vorsprünge durch Durchbrechungen (7, 7', 7", 7"', 8) im Brückenelement (3) ragt. Zum Anbringen zusätzlicher Niete kann beidseitig des Nietes (6) jeweils eine Bohrung (4, 4') vorgesehen sein.

## Beschreibung

Die vorliegende Erfindung betrifft einen Skischuh mit Schaft und Schale, die miteinander gelenkig verbunden sind, wobei die Schale und der Schaft im Fersen-Waden-Bereich durch ein der Schuhform angepaßtes Brückenelement verbunden sind, das mit dem Schaft starr und unlösbar verbunden ist.

Es ist derzeit üblich, den Außenschuh eines Skischuhes zweiteilig auszuführen, und zwar werden Schale und Schaft unabhängig voneinander hergestellt und dann miteinander gelenkig verbunden, sodaß der Schaft gegenüber der Schale in gewissem Ausnaß verschwenkt werden kann. Dabei ist es auch bereits bekannt, daß die Reibung im Gelenk einstellbar ist, sodaß auf diese Weise die Härte des Schuhes eingestellt werden kann. Bei diesen Systemen bleibt der Schuh aber auch bei der härtester Einstellung immer noch in gewissem Ausmaß beweglich, was insbesondere beim Rennsport unerwünscht ist. Um jegliche Beweglichkeit des Schuhes auszuschließen, wäre es natürlich denkbar, den Schuh einstückig herzustellen; dies würde aber bedeuten, daß wegen der wenigen Schuhe, die von Rennsportlern benötigt werden, eigene Formen produziert werden müßten, was die Schuhe für den Rennsport entsprechend verteuern würde. Die große Masse der Schifahrer zieht nämlich aus Komfortgrürden eine gewisse Beweglichkeit des Schuhes vor.

Aus diesem Grund sind auch schon verschiedene Konstruktionen vorgeschlagen worden, um die Beweglichkeit des Skischuhes zu erhöhen. Z.B. ist aus der FR-PS 2 629 691 eine Konstruktion bekannt, bei der der Skischuh dreiteilig aufgebaut ist, wobei alle drei Teile zueinander schwenkbar sind. Dies ist gemäß den Ausführungen in diesem Vorhalt beim Wedeln günstig. Um diese hohe Beweglichkeit wieder etwas einzuschränken, ist gemäß Fig. 3 dieses Vorhalts an der Sohle im Fersenbereich eine Stütze vorgesehen, die sich hinten am Schuh in die Höhe erstreckt. In Normalfall, d.h. ohne starke Belastung, kann sich die bewegliche Schale gleitend an dieser Stütze entlang bewegen, sodaß die Beweglichkeit des Schuhs gewährleistet ist. Nur wenn der Skifahrer eine starke Kraft übertragen möchte, dann blockiert infolge der Reibung der bewegliche Teil der Schale an der Stütze, sodaß der Skischuh in diesem Fall unbeweglich ist. Die Beweglichkeit der Stütze nach hinten wird durch ein Seil eingeschränkt, und mittels eines einstellbaren Anschlags, der an der Stütze angebracht ist, kann die Mindestneigung des Schaftes bezüglich der Schale eingestellt werden.

Aus der DE-OS 21 20 242 ist ein Skischuh bekannt, dessen schwenkbarer Schaft vom Läufer während der Fahrt zeitweise in eine feste Stellung gebracht und wieder frei beweglich gemacht werden kann.

Es ist auch weiters bekannt, zusammen mit dem Schaft ein Versteifungselement mitzuspritzen, welches sich an der Rückseite des Schaftes, also im Wadenbereich in senkrechter Richtung erstreckt und oben und unter mit dem Schaft verbunden ist. Dadurch wird zwar die Steifigkeit des Schaftes in sich erhöht, auf die Beweglichkeit des Schaftes bezüglich der Schale hat dies jedoch keinen Einfluß. Es sind auch schon verschiedene Vorschläge gemacht worden, wie der Winkel zwischen Schaft und Schale eingestellt werden kann, wobei aber immer eine gewisse Beweglichkeit aus Komfortgründen belassen wird. Aus der WO-A-92/16120 ist ein Skischuh bekannt, bei dem Schaft und Schale nicht durch ein Gelenk, sondern durch ein Joch miteinander verbunden sind. Als Aufgabe ist in diesem Vorhalt angegeben (siehe Seite 2, 3. Absatz), wirksam den Bedürfnissen nach individueller, anatomisch richtiger Abstützung nachzukommen, wobei die natürliche Schwenkbewegung des Unterschenkels berücksichtigt werden soll. Es soll also auch mit der Konstruktion gemäß diesem Vorhalt die Beweglichkeit zwischen Schaft und Schale nicht gänzlich verhindert werden. Für den Rennsport ist gemäß diesem Vorhalt eine Stabilisatorstange vorgesehen (siehe Fig. 5 und Seiten 8 - 10 des Vorhalts), die den Bügel des Jochs mit der Sohlenplatte verbindet. Der Schaft ist jedoch mit dem Joch über Stift-Schlitz-Verbindungen verbunden, die mit einer Dämpfung versehen sind. Damit ist eine gewisse Beweglichkeit zwischen Joch und Schaft und damit auch zwischen Schaft und Schale gegeben, was - wie oben bereits zitiert - als Aufgabe in diesem Vorhalt angegeben ist.

Auch in der EP-A-375 604 sind Maßnahmen beschrieben, um die Beweglichkeit zwischen Schale und Schaft einzuschränken. Einerseits ist am Schaft ein federbelasteter Hebel vorgesehen, der - wenn der Schaft vorwärts geneigt wird - hinter einen Vorsprung, der an der Schale unterhalb des Drehpunktes des Hebels vorgesehen ist, einschnappt und so ein Zurückbewegen verhindert. Um auch eine allzugroße weitere Vorwärtsbewegung zu verhindern, ist am Schaft unterhalb des Vorsprungs der Schale ein verschiebbares Element vorgesehen, das in einer bestimmten Position bei einer weiteren Vorwärtsbewegung des Schaftes von unten gegen den Anschlag anstoßt. Die Beweglichkeit zwischen Schale und Schaft wird durch das Zusammenwirken der beiden Elemente eingeschränkt, aber nicht gänzlich verhindert.

Ein Skischuh der Eingangs genannten Art ist aus der DE-OS 41 25 224 bekannt. Gemäß diesem Vorhalt ist eine kleine Platte auf dem Seitenteil des zweiteilig ausgebildeten Schaftes durch einen Knopf gehalten. Unterhalb des Knopfes weist die Platte eine Öffnung auf, durch die ein weiterer Knopf ragt, der in einer Fassung in der Schale gehalten ist. Durch eine spezielle Form der Öffnung kann der Winkel zwischen Schale und Schaft mittels des Knopfes auf zwei unterschiedliche Werte eingestellt werden. Nachteilig bei dieser bekannten Lösung ist, daß infolge der hohen Kräfte, die beim Skifahren, insbesondere bei Skirennen, auftreten, die Fixierung durch jeweils einen Knopf keine ausreichende Stabilität bietet. Weiters ist auch eine unbeabsichtigte Verdrehung des Knopfes möglich, wodurch die Fixierung aufgehoben und eine freie Beweglichkeit zwischen Schale und Schaft herbeigeführt wird. Schließlich ist nachteilig, daß einerseits durch den geringen Abstand der beiden Knöpfe zueinander und anderseits dadurch, daß die Platte nur mit jeweils einem Knopf an der Schale bzw. am Schaft fixiert ist, keine seitliche Fixierung zwischen Schale und Schaft gegeben ist.

Es ist Aufgabe der vorliegenden Erfindung, diese Nachteile zu vermeiden und einen Skischuh zu schaffen, der mit herkömmlichen Formen für Schaft und Schale herstellbar ist und mit Sicherheit nahezu unbeweglich ist, d.h. nahezu keine Schwenkbewegung des Schaftes gegenüber der Schale zuläßt.

Diese Aufgabe wird erfindungsgemäß dadurch gelöst, daß das Brückenelement an mindestens zwei, vorzugsweise an mindestens drei Stellen - beispielsweise durch Nietverbindungen - mit dem Schaft verbunden ist und daß das Brückenelement auch mit der Schale - beispielsweise durch zumindest eine Nietverbindung - starr und unlösbar verbunden ist.

Erfindungsgemäß wird also die Beweglichkeit des Schuhes durch ein Brückenelement verhindert, wobei die hohen Kräfte, die das Brückenelement aufnehmen muß, nicht nur durch die Nietverbindungen übertragen werden, sondern auch durch Reibung, weil das Brückenelement der Schuhform angepaßt ist. Durch das Vorsehen von mindestens zwei oder drei Fixierungen zwischen Brückenelement und Schaft wird auch die seitliche Beweglichkeit (quer zur Fahrtrichtung) zwischen Schale und Schaft weitgehend verhindert.

Vorzugsweise reicht das Brückenelement bis zum oberen Randbereich des Schafts und ist dort mit diesem verbunden. Durch diese Merkmale liegt das Brückenelement sehr großflächig an, wodurch viel Reibung auftritt, was für die Steifigkeit des Schuhes von Vorteil ist. Durch das Vorsehen der Fixierung des Brückenelementes am oberen Rand des Schaftes, also weit über der gelenkigen Verbindung zwischen Schale und Schaft wird eine sehr gute Fixierung zwischen Schale und Schaft bezüglich seitlicher Bewegungen erzielt.

Es ist zweckmäßig, wenn wischen dem Brükkenelement und der Schale bzw. dem Schaft eine als Dämpfung dienende Lage aus Kunststoff angeordnet ist. Durch die etwas nachgiebige Lage aus Kunststoff wird einerseits eine Geräuschbildung vermieden, die sonst bei geringen Relativbewegungen zwischen dem Brückenelement einerseits und der Schale bzw. dem Schaft anderseits auftreten könnte. Außerdem treten, wenn die zusätzliche Lage vorhanden ist, neben Reibungskräften auch Kompressionskräfte auf, d.h. die Lage wird bei geringer Bewegung des Schaftes gegenüber der Schale mehr oder weniger zusammengedrückt, sodaß der Schuh auf diese Weise zusätzlich stabilisiert wird.

Zur Fixierung der Lage ist es zweckmäßig, wenn das Brückenelement Durchbrechungen aufweist, in die entsprechend geformte Vorsprünge der Lage ragen. Dies ist selbst dann zweckmäßig, wenn die Lage zusammen mit dem Brückenelement an der Schale bzw. an dem Schaft angenietet ist, weil auf diese Weise die immer in einem gewissen Ausmaß vorhandene Beweglichkeit der Niete gedämpft wird.

Bei einer bevorzugten Ausführungsform ist das Brückenelement mit dem Schaft an dessen oberen Rand durch drei Niete und mit der Schale im Fersenbereich durch einen Niet verbunden, wobei das Brückenelement beidseitig des der Befestigung mit der Schale dienenden Nietes je eine Bohrung zur Aufnhame zweier weiterer Niete aufweist, und wobei die Schale im Bereich der einzelnen Bohrungen je eine Aussparung (Vertiefung) zur Aufnahme des zugehörigen Nietkopfes aufweist. Wenn das Brückenelement mit der Schale nur durch einen Niet verbunden ist, bleibt eine gewisse seitliche Beweglichkeit zwischen dem Schaft und der Schale möglich. Soll auch diese Beweglichkeit noch verhindert werden, so ist es jederzeit möglich (z.B. beim Schuhkauf im Schuhgeschäft), durch die Bohrung im Brückenelement hindurch den Skischuh (genaugenommen den Außenschuh des Skischuhes) zu durchbohren und dann das Brückenelement an diesen beiden Stellen zusätzlich mit der Schale zu vernieten. Es ist dabei natürlich zweckmäßig, wenn im Außenschuh des Skischuhes an den entsprechenden Stellen bereits Vertiefungen vorhanden sind, damit die nachträglich angebrachten Niete nicht vorstehen und gegen den Innenschuh drücken.

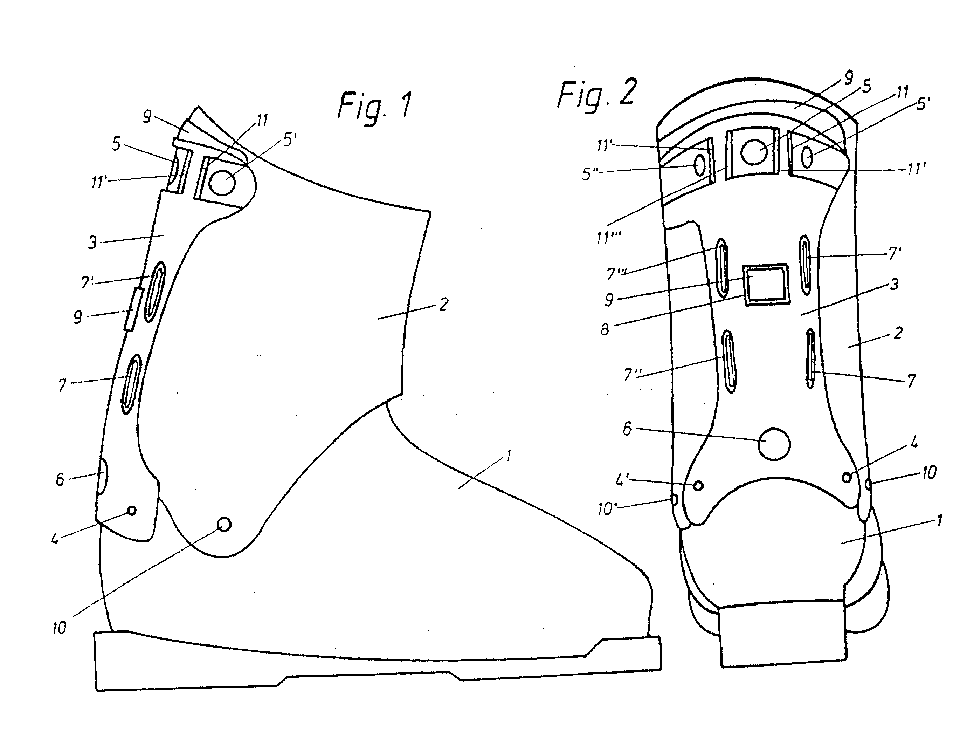

Anhand der beiliegenden Figuren wird ein erfindungsgemäßer Skischuh näher erläutert. Fig. 1 zeigt einen erfindungsgemäßen Skischuh schematisch in Seitenansicht, Fig. 2 denselben Skischuh von hinten gesehen.

Der erfindungsgemäße Skischuh, genau genommen der Außenschuh, besteht aus einer Schale 1 und einem Schaft 2. Diese beiden Elemente sind mittels Gelenken 10, 10' miteinander verbunden, sodaß der Schaft 2 gegenüber der Schale 1 in gewissem Ausmaß verschwenkt werden kann. Um nun diese Schwenkbeweglichkeit für Rennläufer weitestgehend zu reduzieren, ist ein Brückenelement 3 vorgesehen. Dieses Brückenelement 3 ist an seinem oberen Rand mittels dreier Niete, 5, 5', 5" mit dem Schaft verbunden und an seinem unteren Ende mittels eines Nietes 6 mit der Schale. Damit das Brückenelement 3, das relativ hohe Kräfte aufnehmen muß, eine ausreichende Stabilität hat, ist es zweckmäßig, wenn es aus carbonverstärktem Polyamid gefertigt ist. Die Schale 1 und der Schaft 2 können aus Polyurethan bestehen.

Zwischen dem Brückenelement 3 einerseits und der Schale 1 bzw. dem Schaft 2 anderseits befindet sich eine etwa der Außenkontur des Brükkenelementes 3 angepaßte Lage 9 aus elastischem Kunststoff. Diese Lage 9 dient nicht nur zur Verhinderung einer eventuellen Geräuschentwicklung bei Belastung des Skischuhes, sondern sie trägt auch noch zusätzlich zur Dämpfung einer allfälligen Restbeweglichkeit zwischen Schale 1 und Schaft 2 bei. Die Kräfte, die auftreten, wenn der erfindungsgemäße Skischuh belastet wird, werden zum Teil von den Nieten 5, 5', 5" und 6 aufgenommen, zum Teil treten sie als Reibungskräfte zwischen der Lage 9 und dem Brückenelement 3 bzw. zwischen der Lage 9 und der Schale 1 und dem Schaft 2 in Erscheinung und schließlich drücken sie die Lage 9 etwas zusammen.

Damit die Lage 9 nicht nur durch die Niete 5, 5', 5" und 6 fixiert ist, sind im Brückenelement 3 vier längliche Durchbrechungen 7, 7', 7' und 7"' sowie eine quadratische Durchbrechung 8 vorgesehen; an den entsprechenden Stellen hat die Lage 9 Vorsprünge, sodaß sie die Durchbrechungen 7, 7', 7", 7"' und 8 ausfüllt. Diese Ausbildung trägt zusätzlich zur Dämpfung einer Beweglichkeit zwischen Schaft 2 und Schale 1 bei, weil eine niemals ganz zu verhindernde Höhenbeweglichkeit der Niete 5, 5' , 5" und 6 auf diese Weise ausgeglichen wird.

Um auch eine seitliche Bewegung des Schaftes 2 bezüglich der Schale 1 (also bei der Ansicht gemäß Fig. 2 nach links und nach rechts) weitestgehend zu vermeiden, kann das Brückenelement 3 an der Schale 1 durch zwei zusätzliche Niete fixiert werden, sodaß dann insgesamt drei Niete vorhanden sind. Zu diesem Zweck weist das Brückenelement 3 zwei Bohrungen 4, 4' auf, die sich zu beiden Seiten der Niet 6 befinden. Durch diese Bohrungen 4, 4' hindurch kann dann die Schale 1 durchbohrt werden, und dann können zusätzliche Niete angebracht werden. Dabei ist es natürlich zweckmäßig, wenn die Schale 1 an den entsprechenden Stellen bereits Vertiefungen aufweist, damit die anzubringende Nieten nicht an der Innenseite der Schale 1 vorstehen und gegen den Innenschuh drücken.

Es ist bereits Stand der Technik, daß zum Verschließen des Schuhes nicht nur Schnallen vorgesehen sind, sondern daß zusätzlich ganz oben auch noch ein Band mit Klettverschluß vorbanden ist. Zur Führung solch eines Bandes sind im Brükkenelement 3 Schlitze 11, 11', 11" 11'" vorgesehen, durch die das Band abwechselnd von der Innenseite zur Außenseite des Brückenelementes gefädelt ist und dadurch fixiert wird. Als positiver Nebeneffekt kommt hinzu, daß durch das Band die oberen Niete 5, 5' und 5" abgedeckt werden.

## Patentansprüche

1. Skischuh mit Schaft und Schale, die miteinander gelenkig verbunden sind, wobei die Schale und der Schaft im Fersen-Waden-Bereich durch ein der Schuhform angepaßtes Brückenelement verbunden sind, das mit dem Schaft starr und unlösbar verbunden ist, dadurch gekennzeichnet, daß das Brückenelement (3) an mindestens zwei, vorzugsweise an mindestens drei Stellen - beispielsweise durch Nietverbindungen - mit dem Schaft (2) verbunden ist, und daß das Brückenelement (3) auch mit der Schale (1) - beispielsweise durch zumindest eine Nietverbindung - starr und unlösbar verbunden ist.

2. Skischuh nach Anspruch 1, dadurch gekennzeichnet, daß das Brückenelement (3) bis zum oberen Randbereich des Schafts (2) reicht und dort mit diesem verbunden ist.

3. Skischuh nach Anspruch 1 oder 2, dadurch gekennzeichnet, daß zwischen dem Brückenelement (3) und der Schale (1) bzw. dem Schaft (2) eine als Dampfung dienende Lage (9) aus Kunststoff angeordnet ist.

4. Skischuh nach Anspruch 3, dadurch gekennzeichnet, daß das Brückenelement (3) Durchbrechungen (7,8) aufweist, in die entsprechend geformte Vorsprünge der Lage (9) ragen.

5. Skischuh nach einem der Ansprüche 1 bis 4, dadurch gekennzeichnet, daß das Brückenelement (3) mit dem Schaft (2) an dessen oberen Rand durch drei Niete (5,5',5") und mit der Schale (1) im Fersenbereich durch einen Niet (6) verbunden ist, wobei das Brückenelement (3) beidseitig des der Befestigung mit der Schale (1) denenden Nietes (6) je eine Bohrung (4,4') zur Aufnahme zweier weiterer Niete aufweist, und daß die Schale (1) im Bereich der einzelnen Bohrungen (4,4') je eine Aussparung (Vertiefung) zur Aufnahme des zugehörigen Nietkopfes aufweist.
